# EUROPEAN PATENT APPLICATION

(11) **EP 4 755 541 A1**
(43) Date of publication of application: **10.06.2026**
(21) Application number: 24848314.1
(22) Date of filing: 31.07.2024
(51) Int. Cl.: B21B 25/00, C23C 24/10, C22C 19/07, C22C 19/05

(54) **PIERCING PLUG FOR HIGH-ALLOY STEEL PIPE ROLLING AND MANUFACTURING METHOD THEREFOR**

(30) Priority: 31.07.2023 CN 202310946060
(71) Applicant: BAOSHAN IRON & STEEL CO., LTD., Shanghai 201900 (CN)
(72) Inventor: YUE, Shibin, Shanghai 201900 (CN); WANG, Jiugang, Shanghai 201900 (CN); HU, Ping, Shanghai 201900 (CN)
(74) Representative: Kuhnen & Wacker Patent- und Rechtsanwaltsbüro PartG mbB
(86) International application number: PCT/CN2024/108867
(87) International publication number: WO 2025/026359

(57) **Abstract**

A piercing plug for high-alloy steel pipe rolling, comprising a plug base body (1), a high-strength alloy layer (2) provided on the plug base body, and an oxide film layer (3) provided on the high-strength alloy layer. The high-strength alloy layer is made of a cobalt-based alloy; and the oxide film layer is made of an iron-based alloy. Also provided are a cobalt-based alloy and an iron-based alloy. According to the piercing plug, the high-strength alloy layer is designed on the plug base body, thereby solving the problem of falling-off of an oxide film on the surface of the plug due to high-temperature softening of a support part, and by designing the oxide film layer, the problem of steel bonding due to large temperature rise of the surface of the plug is solved, so that the piercing plug for high-alloy steel pipe rolling has good high-temperature strength, and the service life is further prolonged.

## Description

### Technical Field

The present disclosure relates to the technical field of manufacturing piercing plugs for seamless steel pipes, and specifically relates to a piercing plug for rolling high-alloy steel pipes and a preparation method therefor, particularly to a piercing plug with a multi-layer structure for rolling high-alloy steel pipes and a preparation method therefor.

### Background

During the hot rolling piercing production of seamless steel pipes, the plug is subjected to complex stresses and operates in a harsh service environment. Particularly in the production of medium and high-alloy steel, affected by the high deformation resistance of high-alloy steel, the plug endures complex stresses and a harsh service environment. Its surface is highly prone to failure due to problems such as steel adhesion, material loss, cracking, and melting loss. This not only results in a short service life and high costs but also easily leads to production accidents and quality incidents. The quality and service life of the plug directly affect the output and quality of steel pipe production as well as the economic benefits of enterprises.

Chinese Patent Publication CN107855366A discloses a steel pipe piercing plug and its preparation method. In this technology, the Cr content is extremely high; the high-alloy steel substrate is not conducive to forming a high-quality oxide film, and a single material can hardly achieve good high-temperature resistance and thermal insulation effects.

Chinese Patent Publication CN104364414A discloses a piercing plug and its manufacturing method. The piercing plug of this technology comprises a plug body and a sprayed coating containing iron and iron oxides formed on the surface of the plug body. In addition to iron and iron oxides, the chemical composition of the sprayed coating further comprises, by mass%, C: 0.015-0.6%, Si: 0.05-0.5%, Mn: 0.1-1.0%, and Cu: 0-0.3%. However, the bonding force between the sprayed coating and the substrate in this technology is weak, which easily leads to peeling and thus reduces the service life of the plug.

In view of the above situation, there is an urgent need to develop a new piercing plug and its preparation method, which can solve the problems existing in the design of single-material plugs, such as insufficient thermal strength of the substrate, poor bonding force between the oxide film and the substrate, and easy cracking and peeling of the oxide film.

### Summary

Aiming at solving the problems existing in the design of single-material plugs in the prior art, such as insufficient thermal strength of the substrate, poor bonding force between the oxide film and the substrate, and easy cracking and peeling of the oxide film, the present disclosure aims to provide a piercing plug for rolling high-alloy steel pipes and a preparation method therefor. By designing a high-strength alloy layer on the plug substrate, the problem that the oxide film on the plug surface falls off due to the high-temperature softening of the supporting part is solved; and by designing an oxide film layer, the problem of large surface temperature rise and steel adhesion of the plug is addressed. As a result, the piercing plug for rolling high-alloy steel pipes has good high-temperature strength, and at the same time, its surface is provided with an oxide film with good lubricating effect to prevent steel adhesion, further improving the service life.

To achieve the above objective, the present disclosure adopts the following technical solutions:
A first aspect of the present disclosure provides a piercing plug for rolling high-alloy steel pipes, comprising a plug substrate, a high-strength alloy layer disposed on the plug substrate, and an oxide film layer disposed on the high-strength alloy layer;
wherein the material of the high-strength alloy layer is a cobalt-based alloy;
wherein the material of the oxide film layer is an iron-based alloy.

Preferably, the high-strength alloy layer comprises the following components by weight percentage: Co: 45-49%, Cr: 15-30%, W: 13-20%, Ni: 10-20%, Fe: 6-12%, Mn: 0.3-0.9%, and Mo: 0.3-0.9%.

Preferably, the thickness of the high-strength alloy layer is 1-10 mm.

Preferably, the oxide film layer comprises the following components by weight percentage: C: 0.15-0.40%, Cr: 1-5%, and a balance of iron.

Preferably, the oxide film layer further comprises Ni: 2.5-3.5%.

Preferably, the oxide film layer comprises V: 0.20-0.50% and W: 7.5-9.0%.

Preferably, the thickness of the oxide film layer is 0.1-1.3 mm.

Preferably, the oxide film layer comprises a hard alloy phase WC.

Preferably, the plug substrate is one of 20CrNi3, 3Cr2W8V, and 35CrMo.

Preferably, the tensile strength of the high-strength alloy layer is 500-750 MPa.

Preferably, the tensile strength of the piercing plug is 800-950 MPa, more preferably 840-910 MPa.

A second aspect of the present disclosure provides a method for preparing the piercing plug for rolling high-alloy steel pipes as described in the first aspect of the present disclosure, comprising the steps of: obtaining the plug substrate of the piercing plug by machining, cladding the high-strength alloy layer on the surface of the plug substrate by laser cladding, and then cladding the oxide film layer on the surface of the high-strength alloy layer to obtain the piercing plug for rolling high-alloy steel pipes.

A third aspect of the present disclosure provides a cobalt-based alloy, comprising the following components by weight percentage: Co: 45-49%, Cr: 15-30%, W: 13-20%, Ni: 10-20%, Fe: 6-12%, Mn: 0.3-0.9%, and Mo: 0.3-0.9%. In some embodiments, the content of Fe is 6-10%. In some embodiments, the tensile strength of the cobalt-based alloy is 500-750 MPa.

A fourth aspect of the present disclosure provides an iron-based alloy, comprising the following components by weight percentage: C: 0.15-0.40%, Cr: 1-5%, optional Ni: 2.5-3.5%, and optional V: 0.20-0.50% and W: 7.5-9.0%, with a balance of iron. In some embodiments, the iron-based alloy comprises a hard alloy phase WC. In some embodiments, the iron-based alloy is used as an oxide film layer and does not adhere to steel during steel pipe rolling.

A fifth aspect of the present disclosure provides use of the cobalt-based alloy and/or the iron-based alloy described in any embodiment herein in the preparation of piercing plugs, and use in improving the service life of piercing plugs.

Compared with the prior art, the beneficial effects of the present disclosure are as follows:
1. The piercing plug for rolling high-alloy steel pipes and the preparation method therefor of the present disclosure solve the problem that the oxide film on the plug surface falls off due to the high-temperature softening of the supporting part by designing a high-strength alloy layer on the plug substrate, and solve the problem of large surface temperature rise and steel adhesion of the plug by designing an oxide film layer. As a result, the piercing plug for rolling high-alloy steel pipes has good high-temperature strength, and at the same time, its surface is provided with an oxide film with good lubricating effect to prevent steel adhesion, further improving the service life.
2. The high-strength alloy layer of the piercing plug for rolling high-alloy steel pipes of the present disclosure provides solid support for the oxide film layer in a high-temperature service environment, and the oxide film layer plays a role in lubrication and heat insulation; the surface hardness and wear resistance of the piercing plug for rolling high-alloy steel pipes are greatly improved, and it also has repairability, meeting the requirements of national green manufacturing.
3. The piercing plug for rolling high-alloy steel pipes of the present disclosure has good high-temperature strength, and its service life is 26-30 times that of the original.

### Description of the drawings

By reading the detailed description of non-limiting embodiments with reference to the following figure, other features, objects, and advantages of the present disclosure will become more apparent:

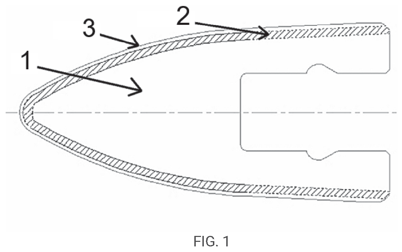

FIG. 1 is a schematic structural view of the piercing plug for rolling high-alloy steel pipes according to the present disclosure.

### Detailed Description

The present disclosure will be described in detail below with reference to specific examples. The following examples will help those skilled in the art to further understand the present disclosure, but do not limit the present disclosure in any form.

The piercing plug for rolling high-alloy steel pipes provided by the present disclosure has good high-temperature strength, and its service life can reach 26-30 times that of the original piercing plug.

As shown in FIG. 1, the piercing plug for rolling high-alloy steel pipes provided by the present disclosure comprises a plug substrate 1, a high-strength alloy layer 2 disposed on the plug substrate 1, and an oxide film layer 3 disposed on the high-strength alloy layer 2.

The material of the high-strength alloy layer is a cobalt-based alloy; in a specific embodiment, the high-strength alloy layer provides solid support for the oxide film layer in a high-temperature service environment, and it comprises the following components by weight percentage: Co: 45-49%, Cr: 15-30%, W: 13-20%, Ni: 10-20%, Fe: 6-12%, Mn: 0.3-0.9%, and Mo: 0.3-0.9%.

In the above high-strength alloy layer, the design principle of each component is as follows:
Co: Co has a high melting point. Adding Co is beneficial to improving the material's load-bearing capacity at high temperatures, hot corrosion resistance, cold and thermal fatigue resistance, and high-temperature creep resistance. However, an excessively high Co content leads to high costs, reduces the cost-performance ratio of the material, and limits its application range; therefore, the Co content is controlled at 45-49%.

Cr: Increasing the Cr content can effectively improve the material's oxidation resistance, thereby inhibiting the interactive promotion mechanism of oxidation and wear and enhancing wear resistance. The combination of Cr and C to form carbides also improves wear resistance. However, a further increase in Cr content will cause a reduction in the addition amount of other alloying elements, which is not conducive to hardness improvement and adverse to wear resistance. Moreover, an excessively high Cr content makes it easy for steel adhesion to occur between the billet and the tool under high temperature and pressure, leading to tool failure. Therefore, the Cr content is controlled at 15-30%. In some embodiments, the Cr content is 15-25%. In some embodiments, the Cr content is 15-20%.

W: W can improve the material's high-temperature strength and thermal strength. It enhances strength through mechanisms such as solid solution strengthening, precipitation strengthening by forming carbides and intermetallic compounds like Co₃W. However, an excessively high content is detrimental to welding quality and tends to form excessive brittle phases such as intermetallic compounds, reducing the toughness of the cladding layer. Therefore, the W content is controlled at 13-20%.

Ni: Ni can improve the material's high-temperature strength while enhancing toughness, improve the fluidity during welding cladding to enhance the quality of the cladding layer, and prevent the occurrence of welding cracks. However, an excessively high Ni content results in high costs, reduces the material's cost-performance ratio, and limits its application range. Therefore, the Ni content is controlled at 10-20%.

Fe: Fe can improve the plasticity and toughness of the cobalt-based alloy, enhance machinability, and help reduce the Fe content gradient between the cladding layer and the iron-based material, thereby reducing the difference between dissimilar metals on both sides of the interface and improving interface bonding force. However, an excessive content reduces high-temperature strength. Therefore, the Fe content is controlled at 6-12%. In some embodiments, the Fe content is 6-10%.

Mn: Mn can improve the machinability of the cobalt-based alloy and help reduce the Mn content gradient between the cladding layer and the iron-based material, thereby reducing the difference between dissimilar metals on both sides of the interface and improving interface bonding force. However, an excessive content reduces high strength. Therefore, the Mn content is controlled at 0.3-0.9%.

Mo: Mo can achieve solid solution strengthening and form intermetallic compounds such as Co₃Mo to improve strength. However, an excessively high content is harmful to welding quality and tends to form excessive brittle phases such as intermetallic compounds, reducing the toughness of the cladding layer. Therefore, the Mo content is controlled at 0.3-0.9%.

In a specific embodiment, the thickness of the high-strength alloy layer is 1-10 mm.

The material of the oxide film layer is an iron-based alloy; in a specific embodiment, the oxide film layer plays roles in lubrication and heat insulation, and it comprises the following components by weight percentage: C: 0.15-0.40%, Cr: 1.0-5.0%, and a balance of iron.

In the above oxide film layer, C is a carbide-forming element, which can improve the strength of the piercing plug (including room-temperature and high-temperature strength) through solid solution strengthening and precipitation strengthening. However, excessively high C is adverse to the toughness of the plug, reduces thermal shock resistance, and is not conducive to oxide film formation because the reaction between oxygen and carbon takes precedence over that between oxygen and iron. Therefore, the present disclosure controls the C content between 0.15-0.40%. Cr is beneficial to the formation of an oxide film with good adhesion to the substrate on the surface, but an excessively high Cr content is not conducive to grain boundaries oxidizing preferentially over the substrate to form more oxide film-substrate bonding contacts per unit area, leading to a decrease in the bonding force between the oxide film and the substrate. Cr can also combine with carbon to form carbides, improving high-temperature strength. Therefore, the present disclosure controls the Cr content between 1.00-5.00%.

In a specific embodiment, the oxide film layer further comprises Ni: 2.50-3.50%. Ni is a solid solution strengthening element that helps improve the high-temperature strength of the substrate. In addition, it can improve the hardenability of the material, preventing the formation of more ferrite soft phases due to surface decarburization during the high-temperature oxidation process of the plug, which would lead to a decrease in surface high-temperature strength; Ni will form Ni-rich particles in the inner oxide film formed during high-temperature oxidation heat treatment, which is beneficial to improving the internal bonding force of the oxide film. However, an excessively high Ni content increases the manufacturing cost of the plug, and an excessively high Ni content reduces the phase transition temperature of the material from ferrite to austenite, making the material more prone to austenitic phase transition due to temperature rise during use. During the subsequent cooling process, austenite transforms into martensite or bainite, resulting in fatigue damage, and internal stress generated by the phase transition reduces thermal shock resistance. Therefore, the present disclosure controls the Ni content between 2.50-3.50%.

In a specific embodiment, the oxide film layer further comprises V: 0.20-0.50% and W: 7.5-9.0%. V mainly plays a role in grain refinement and improving the strength and toughness of the material. An excessively high V content is adverse to the high-temperature oxidation resistance of the steel; therefore, the present disclosure controls the V content at 0.20-0.50%. W forms carbides, which exist in the material as M₆C and MC-type carbides. These types of carbides have the characteristics of high hardness and can significantly improve the high-temperature strength of the material. An excessively high W content tends to reduce thermal conductivity; therefore, the present disclosure controls the W content at 7.5-9.0%.

In a specific embodiment, the thickness of the oxide film layer is 0.1-1.3 mm.

In a specific embodiment, the oxide film layer comprises the hard alloy phase tungsten carbide (WC) to improve the bonding firmness between the oxide film layer and the substrate.

In a specific embodiment, the plug substrate mainly serves to connect the mandrel and provide a welding substrate for the high-strength alloy layer. Any metal material known in the art that can be used as a plug substrate can be used in the present disclosure. Exemplary plug substrates comprise one of 20CrNi3, 3Cr2W8V, 35CrMo, etc.

The preparation method of the above piercing plug for rolling high-alloy steel pipes comprises: obtaining the plug substrate of the piercing plug by machining, cladding the high-strength alloy layer on the surface of the plug substrate by laser cladding, and then cladding the oxide film layer on the surface of the high-strength alloy layer to obtain the piercing plug for rolling high-alloy steel pipes; during the above laser cladding process, the laser power used is 1000-8000 W (e.g., 1000-2900 W), and the alloy powder feeding rate is 5-150 g/min (e.g., 5-50 g/min, 20-150 g/min, or 20-50 g/min).

The piercing plug for rolling high-alloy steel pipes and its preparation method will be further introduced below with reference to specific examples.

### Example 1

As shown in FIG. 1, the piercing plug for rolling high-alloy steel pipes in this embodiment comprises a plug substrate 1 made of 20CrNi3 steel. The plug substrate mainly serves to connect the mandrel and provide a welding base for the high-strength alloy layer 2.

First, the plug substrate 1 is processed by machining to obtain the required geometric dimensions. This ensures a certain machining allowance after the subsequent welding of the high-strength alloy layer 2 and the oxide film layer 3, and guarantees that the thickness of the oxide film layer 3 is 0.1-1.3 mm after obtaining the required plug shape. On the surface of the plug substrate 1, a high-strength alloy layer 2 is clad by laser cladding, whose composition is shown in Table 1, with a thickness of 1-10 mm, functioning to provide solid support for the oxide film layer. Then, an oxide film layer 3 is welded on the surface of the high-strength alloy layer 2, and the composition of the oxide film layer 3 is shown in Table 1; the welding process is laser cladding, and the thickness of the oxide film layer 3 is 0.3-1.3 mm. Finally, the required geometric dimensions are obtained by machining.

Through the above process, the strength of the piercing plug is greatly improved. It not only meets the rigidity required for piercing but also has good high-temperature resistance. The service life is expressed by the number of piercing times. The piercing plug for rolling high-alloy steel pipes in this embodiment can achieve 30 piercing times, that is, 30 zirconium alloy steel pipes are produced, which is 30 times that of the original piercing plug (made of 20CrNi3 with 1 piercing time). Local wear of the oxide film layer may occur after a period of use, which can be repaired by turning off the worn part and re-cladding the oxide film layer. Cost reduction is achieved through recycling.

### Example 2

As shown in FIG. 1, the piercing plug for rolling high-alloy steel pipes in this embodiment comprises a plug substrate 1 made of 35CrMo steel. The plug substrate mainly serves to connect the mandrel and provide a welding base for the high-strength alloy layer 2.

First, the plug substrate 1 is processed by machining to obtain the required geometric dimensions. This ensures a certain machining allowance after the subsequent welding of the high-strength alloy layer 2 and the oxide film layer 3, and guarantees that the thickness of the oxide film layer 3 is 0.1-1.3 mm after obtaining the required plug shape. On the surface of the plug substrate 1, a high-strength alloy layer 2 is clad by laser cladding, whose composition is shown in Table 1, with a thickness of 1-10 mm, functioning to provide solid support for the oxide film layer. Then, an oxide film layer 3 is welded on the surface of the high-strength alloy layer 2, and the composition of the oxide film layer 3 is shown in Table 1; the welding process is laser cladding, and the thickness of the oxide film layer 3 is 0.1-1.3 mm. Finally, the required geometric dimensions are obtained by machining.

Through the above process, the strength of the piercing plug is greatly improved. It not only meets the rigidity required for piercing but also has good high-temperature resistance. The service life is expressed by the number of piercing times. The piercing plug for rolling high-alloy steel pipes in this embodiment can achieve 26 piercing times, that is, 26 zirconium alloy steel pipes are produced, which is 26 times that of the original piercing plug (made of 20CrNi3 with 1 piercing time). Local wear of the oxide film layer may occur after a period of use, which can be repaired by turning off the worn part and re-cladding the oxide film layer. Cost reduction is achieved through recycling.

### Example 3

As shown in FIG. 1, the piercing plug for rolling high-alloy steel pipes in this embodiment comprises a plug substrate 1 made of 3Cr2W8V steel. The plug substrate mainly serves to connect the mandrel and provide a welding base for the high-strength alloy layer 2.

First, the plug substrate 1 is processed by machining to obtain the required geometric dimensions. This ensures a certain machining allowance after the subsequent welding of the high-strength alloy layer 2 and the oxide film layer 3, and guarantees that the thickness of the oxide film layer 3 is 0.1-1.3 mm after obtaining the required plug shape. On the surface of the plug substrate 1, a high-strength alloy layer 2 is clad by laser cladding, whose composition is shown in Table 1, with a thickness of 1-10 mm, functioning to provide solid support for the oxide film layer. Then, an oxide film layer 3 is welded on the surface of the high-strength alloy layer 2; the composition of the oxide film layer 3 is shown in Table 1, and the oxide film layer comprises the hard alloy phase WC. The welding process is laser cladding, and the thickness of the oxide film layer 3 is 0.1-1.3 mm. Finally, the required geometric dimensions are obtained by machining.

Through the above process, the strength of the piercing plug is greatly improved. It not only meets the rigidity required for piercing but also has good high-temperature resistance. The service life is expressed by the number of piercing times. The piercing plug for rolling high-alloy steel pipes in this embodiment can achieve 29 piercing times, that is, 29 zirconium alloy steel pipes are produced, which is 29 times that of the original piercing plug (made of 20CrNi3 with 1 piercing time). Local wear of the oxide film layer may occur after a period of use, which can be repaired by turning off the worn part and re-cladding the oxide film layer. Cost reduction is achieved through recycling.

### Example 4

As shown in FIG. 1, the piercing plug for rolling high-alloy steel pipes in this embodiment comprises a plug substrate 1 made of 3Cr2W8V steel. The plug substrate mainly serves to connect the mandrel and provide a welding base for the high-strength alloy layer 2.

First, the plug substrate 1 is processed by machining to obtain the required geometric dimensions. This ensures a certain machining allowance after the subsequent welding of the high-strength alloy layer 2 and the oxide film layer 3, and guarantees that the thickness of the oxide film layer 3 is 0.1-1.3 mm after obtaining the required plug shape. On the surface of the plug substrate 1, a high-strength alloy layer 2 is clad by laser cladding, whose composition is shown in Table 1, with a thickness of 1-10 mm, functioning to provide solid support for the oxide film layer. Then, an oxide film layer 3 is welded on the surface of the high-strength alloy layer 2, and the composition of the oxide film layer 3 is shown in Table 1; the welding process is laser cladding, and the thickness of the oxide film layer 3 is 0.1-1.3 mm. Finally, the required geometric dimensions are obtained by machining.

Through the above process, the strength of the piercing plug is greatly improved. It not only meets the rigidity required for piercing but also has good high-temperature resistance. The service life is expressed by the number of piercing times. The piercing plug for rolling high-alloy steel pipes in this embodiment can achieve 27 piercing times, that is, 27 zirconium alloy steel pipes are produced, which is 27 times that of the original piercing plug (made of 20CrNi3 with 1 piercing time). Local wear of the oxide film layer may occur after a period of use, which can be repaired by turning off the worn part and re-cladding the oxide film layer. Cost reduction is achieved through recycling.

### Example 5

As shown in FIG. 1, the piercing plug for rolling high-alloy steel pipes in this embodiment comprises a plug substrate 1 made of 35CrMo steel. The plug substrate mainly serves to connect the mandrel and provide a welding base for the high-strength alloy layer 2.

First, the plug substrate 1 is processed by machining to obtain the required geometric dimensions. This ensures a certain machining allowance after the subsequent welding of the high-strength alloy layer 2 and the oxide film layer 3, and guarantees that the thickness of the oxide film layer 3 is 0.1-1.3 mm after obtaining the required plug shape. On the surface of the plug substrate 1, a high-strength alloy layer 2 is clad by laser cladding, whose composition is shown in Table 1, with a thickness of 1-10 mm, functioning to provide solid support for the oxide film layer. Then, an oxide film layer 3 is welded on the surface of the high-strength alloy layer 2; the composition of the oxide film layer 3 is shown in Table 1, and the oxide film layer comprises the hard alloy phase WC. The welding process is laser cladding, and the thickness of the oxide film layer 3 is 0.1-1.3 mm. Finally, the required geometric dimensions are obtained by machining.

Through the above process, the strength of the piercing plug is greatly improved. It not only meets the rigidity required for piercing but also has good high-temperature resistance. The service life is expressed by the number of piercing times. The piercing plug for rolling high-alloy steel pipes in this embodiment can achieve 28 piercing times, that is, 28 zirconium alloy steel pipes are produced, which is 28 times that of the original piercing plug (made of 20CrNi3 with 1 piercing time). Local wear of the oxide film layer may occur after a period of use, which can be repaired by turning off the worn part and re-cladding the oxide film layer. Cost reduction is achieved through recycling.

### Example 6

As shown in FIG. 1, the piercing plug for rolling high-alloy steel pipes in this embodiment comprises a plug substrate 1 made of 20CrNi3 steel. The plug substrate mainly serves to connect the mandrel and provide a welding base for the high-strength alloy layer 2.

First, the plug substrate 1 is processed by machining to obtain the required geometric dimensions. This ensures a certain machining allowance after the subsequent welding of the high-strength alloy layer 2 and the oxide film layer 3, and guarantees that the thickness of the oxide film layer 3 is 0.1-1.3 mm after obtaining the required plug shape. On the surface of the plug substrate 1, a high-strength alloy layer 2 is clad by laser cladding, whose composition is shown in Table 1, with a thickness of 1-10 mm, functioning to provide solid support for the oxide film layer. Then, an oxide film layer 3 is welded on the surface of the high-strength alloy layer 2; the composition of the oxide film layer 3 is shown in Table 1, and the oxide film layer comprises the hard alloy phase WC. The welding process is laser cladding, and the thickness of the oxide film layer 3 is 0.1-1.3 mm. Finally, the required geometric dimensions are obtained by machining.

Through the above process, the strength of the piercing plug is greatly improved. It not only meets the rigidity required for piercing but also has good high-temperature resistance. The service life is expressed by the number of piercing times. The piercing plug for rolling high-alloy steel pipes in this embodiment can achieve 29 piercing times, that is, 29 zirconium alloy steel pipes are produced, which is 29 times that of the original piercing plug (made of 20CrNi3 with 1 piercing time). Local wear of the oxide film layer may occur after a period of use, which can be repaired by turning off the worn part and re-cladding the oxide film layer. Cost reduction is achieved through recycling.

**Table 1: Materials and Service Life of Piercing Plugs**

| | High-Strength Alloy Layer / Weight Percentage (%) | | | | | | | Oxide Film Layer / Weight Percentage (%) | | | | | | Number of Piercing Times |
|---|---|---|---|---|---|---|---|---|---|---|---|---|---|---|
| | Co | Cr | W | Ni | Fe | Mn | Mo | C | Cr | Ni | Fe | v | W | |
| Example 1 | 45 | 15 | 17 | 12 | the balance | 0.3 | 0.9 | 0.20 | 1.3 | 3.1 | the balance | / | / | 30 |
| Example 2 | 47 | 15 | 14 | 15 | the balance | 0.9 | 0.6 | 0.35 | 1.2 | / | the balance | / | / | 26 |
| Example 3 | 49 | 20 | 13 | 10 | the balance | 0.7 | 0.9 | 0.37 | 2.5 | / | the balance | 0.4 | 8.2 | 29 |
| Example 4 | 45 | 25 | 13 | 10 | the balance | 0.5 | 0.3 | 0.15 | 5.0 | 2.5 | the balance | / | / | 27 |
| Example 5 | 45 | 15 | 20 | 13 | the balance | 0.3 | 0.6 | 0.35 | 3.0 | 0 | the balance | 0.2 | 9.0 | 28 |
| Example 6 | 46 | 15 | 13 | 19 | the balance | 0.5 | 0.4 | 0.40 | 3.5 | 0 | the balance | 0.5 | 7.5 | 29 |

Table 2 shows the welding process, the thicknesses of the high-strength alloy layer and the oxide film layer, as well as the tensile strengths of the high-strength alloy layer and the piercing plug. The tensile strengths of the high-strength alloy layer and the piercing plug were measured in accordance with ASTM A370-2021.

**Table 2**

| | Welding Process | | Thickness of High-Strength Alloy Layer (mm) | Thickness of Oxide Film Layer (mm) | Strength of High-Strength Alloy Layer (MPa) | Strength of Piercing Plug (MPa) |
|---|---|---|---|---|---|---|
| | Laser Power (W) | Alloy Powder Feeding Rate (g/min) | | | | |
| Example 1 | 1000 | 5 | 1 | 1 | 500 | 846 |
| Example 2 | 2900 | 16 | 2.4 | 0.6 | 550 | 892 |
| Example 3 | 4000 | 27 | 5 | 0.3 | 590 | 863 |
| Example 4 | 5000 | 35 | 3.8 | 0.5 | 700 | 905 |
| Example 5 | 6000 | 28 | 7.4 | 1.3 | 640 | 900 |
| Example 6 | 8000 | 50 | 10 | 0.1 | 600 | 844 |

In summary, the above examples are only used to illustrate the technical solution of the present disclosure and not to limit it. Although the present disclosure has been described in detail with reference to the preferred examples, those of ordinary skill in the art should understand that the technical solution of the present disclosure can be modified or equivalently substituted without departing from the purpose and scope of the technical solution of the present disclosure, and all such modifications and substitutions shall be covered by the scope of the claims of the present disclosure.

## Claims

1. A cobalt-based alloy, comprising the following components by weight percentage: Co: 45-49%, Cr: 15-30%, W: 13-20%, Ni: 10-20%, Fe: 6-12%, Mn: 0.3-0.9%, and Mo: 0.3-0.9%.

2. The cobalt-based alloy according to claim 1, wherein a tensile strength of the alloy is 500-750 MPa.

3. A piercing plug, comprising a plug substrate, a high-strength alloy layer disposed on the plug substrate, and an oxide film layer disposed on the high-strength alloy layer; wherein a material of the high-strength alloy layer is a cobalt-based alloy, and a material of the oxide film layer is an iron-based alloy.

4. The piercing plug according to claim 3, wherein the high-strength alloy layer comprises the following components by weight percentage: Co: 45-49%, Cr: 15-30%, W: 13-20%, Ni: 10-20%, Fe: 6-12%, Mn: 0.3-0.9%, and Mo: 0.3-0.9%.

5. The piercing plug according to claim 3, wherein a thickness of the high-strength alloy layer is 1-10 mm.

6. The piercing plug according to claim 3, wherein the oxide film layer comprises the following components by weight percentage: C: 0.15-0.40%, Cr: 1-5%, and a balance of iron.

7. The piercing plug according to claim 6, wherein the oxide film layer further comprises Ni: 2.5-3.5%.

8. The piercing plug according to claim 6, wherein the oxide film layer comprises V: 0.20-0.50% and W: 7.5-9.0%.

9. The piercing plug according to claim 3, wherein a thickness of the oxide film layer is 0.1-1.3 mm.

10. The piercing plug according to claim 3, wherein the oxide film layer comprises hard alloy phase WC.

11. The piercing plug according to claim 3, wherein the plug substrate is one of 20CrNi3, 3Cr2W8V, and 35CrMo.

12. The piercing plug according to claim 3, wherein a tensile strength of the high-strength alloy layer is 500-750 MPa; and/or a tensile strength of the piercing plug is 800-950 MPa, preferably 840-910 MPa.

13. A method for preparing the piercing plug according to any one of claims 3-12, wherein the method comprises: obtaining the plug substrate of the piercing plug by machining, cladding the high-strength alloy layer on a surface of the plug substrate by laser cladding, and then cladding the oxide film layer on a surface of the high-strength alloy layer to obtain the piercing plug.

14. The method according to claim 13, wherein a laser power used for the laser cladding is 1000-8000 W, and an alloy powder feeding rate is 5-150 g/min, preferably 5-50 g/min.

15. An iron-based alloy, comprising the following components by weight percentage: C:
0.15-0.40%, Cr: 1-5%, optional Ni: 2.5-3.5%, and optional V: 0.20-0.50% and W: 7.5-9.0%, with a balance of iron.
